# EUROPÄISCHE PATENTSCHRIFT

(11) **EP 2 157 780 B1**
(45) Veröffentlichungstag und Bekanntmachung des Hinweises auf die Patenterteilung: **09.09.2015**
(21) Anmeldenummer: 09166183.5
(22) Anmeldetag: 23.07.2009
(51) Int. Cl.: H04N 1/60

(54) **Verfahren und Einrichtung zum Drucken von unterschiedlichen Nutzen auf einem Druckbogen**
Method and device for printing different uses on a printing sheet
Procédé et dispositif d'impression de diverses utilisations sur une feuille d'impression

(30) Priorität: 21.08.2008 DE 102008038608
(43) Veröffentlichungstag der Anmeldung: 24.02.2010
(73) Patentinhaber: Heidelberger Druckmaschinen Aktiengesellschaft, 69115 Heidelberg (DE)
(72) Erfinder: Redmer, Eberhard, 24326, Ascheberg (DE)

(56) Entgegenhaltungen:
- EP-A1- 0 884 182
- EP-A1- 2 008 801
- DE-A1- 10 312 998
- DE-A1- 19 525 186
- DE-B3-102004 014 549

## Beschreibung

Im Verpackungsdruck werden in der Regel mehrere Nutzen für Etiketten oder Faltschachteln auf einen Bogen gedruckt. Dabei werden häufig auch Sammeldruckformen eingesetzt, bei denen Nutzen für unterschiedliche Faltschachteln oder Etiketten auf einem Bogen angeordnet werden, sei es um den Bogen auf diese Weise besser auszunutzen und weniger Verschnitt zu produzieren, oder um die Anzahl der Bogen zu erhöhen, die in einem Durchlauf gedruckt werden können. Es ist auch bekannt, die für den Druckauftrag relevanten Daten solcher Sammeldruckformen abzuspeichern und beim Wiederholauftrag zur Voreinstellung der Druckmaschine, z. B. zur Voreinstellung der Farbzonenöffnungen, zu verwenden.

In einigen Fällen kann die ursprüngliche Zusammenstellung der unterschiedlichen Nutzen für den Druckbogen jedoch nicht beibehalten werden. Wenn beispielsweise nicht alle, sondern nur einige bestimmte Nutzen aus dem alten Auftrag nachgedruckt werden sollen, dafür aber andere, neue Nutzen benötigt werden, müssen neue Druckplatten belichtet werden, mit denen dann die neu zusammengestellten unterschiedlichen Nutzen produziert werden.

Hierbei bleibt es auch nicht aus, dass die neu miteinander kombinierten Nutzen aufgrund des anderen Bildinhalts auch eine andere Farbgebung erfordern bzw. in den einzelnen Farbzonen der Druckwerke mehr oder weniger Farbe abnehmen als in dem gespeicherten Auftrag. Nun wird man in einem solchen Falle zwar die Farbzonenöffnungen aus den Bilddaten des neuen Auftrags neu berechnen. Jetzt tritt aber das Problem auf, dass aufgrund der geänderten Farbzonenöffnungen die Färbung der beibehaltenen "alten" Nutzen nicht mehr exakt getroffen wird.

Im Verpackungsdruck müssen aber die gedruckten Nutzen sehr genau ihr jeweiliges archiviertes Originalmuster treffen. Denn wenn Faltschachteln der gleichen Art aus unterschiedlicher Produktion sich im gleichen Regal beim Verkauf treffen, fallen Farbunterschiede sofort auf und erwecken den Eindruck minderer Qualität aufgrund der nicht einheitlichen Färbung.

Aus diesem Grunde versucht man in der Produktion weitestgehend reine Formen mit nur einem Nutzen zu produzieren und Sammeldruckformen möglichst zu vermeiden. Andererseits kann man dann die eingangs genannten Vorteile von Sammeldruckformen nicht nutzen.

Die DE 195 25 186 A1 beschreibt ein Verfahren zur Bestimmung der Messorte beim Drucken gemischter Nutzen auf einem Bogen. Dabei wird jedem gleichartigen Nutzen der gleiche Messort für die Farbmessung zugewiesen.

Aus der DE 35 27 500 A1 ist es bekannt, für die verschiedenen auf einer Seite bzw. einem Bogen anzuordnenden Bildelemente Farbbedarfsmengen als Mittelwerte von Flächendeckungswerten im Halbtonbild der Bildelemente zu ermitteln und zu speichern.

In der EP 0 884 182 A1 ist ein Verfahren zur Regelung von Betriebsvorgängen an einer Druckmaschine beschrieben, bei dem Bildsignale, die durch Abtastung des gedruckten Bogens gewonnen werden, zur Regelung von Farbgebung, Feuchte oder Register der Maschine verwendet werden, aber auch dazu dienen können, fehlerhaft bedruckte Bögen zu markieren und auszusondern.

Die DE 103 12 998 A1 beschreibt ein Verfahren zur Steuerung von Druckmaschinen, bei dem Einstellwerte für die Farbführung beim Fortdruck jeweils gespeichert und zur Voreinstellung der Farbzonen bei Folgeaufträgen verwendet werden.

Weder das Problem von Färbungsänderungen beim Drucken von Sammelaufträgenmit gemischten Nutzen sind in den genannten Schriften angesprochen, noch lassen sich diesen Schriften Maßnahmen zur Lösung des genannten Problems entnehmen.

Es ist deshalb die Aufgabe der vorliegenden Erfindung, ein Verfahren anzugeben, mit dessen Hilfe bereits beim Vorbereiten des Drucks bzw. beim Herstellen der Druckplatte in der Druckvorstufe das Färbungsverhalten auch bei unterschiedlich miteinander kombinierten Nutzen möglichst konstant bleibt.

Diese Aufgabe wird mit den im Anspruch 1 angegebenen Maßnahmen gelöst. Eine zur Durchführung des Verfahrens geeignete Einrichtung besitzt die im Anspruch 12 angegebenen Merkmale.

Gemäß der Erfindung werden die Flächendeckungswerte des Bogens aus einem früheren Auftrag mit denen eines Folgeauftrags mit zum Teil unterschiedlichen gemischten Nutzen verglichen, bevor die Druckplatte für den "teilweisen" Wiederholauftrag hergestellt wird. Auf diese Weise lässt sich anhand des Vergleichs nach vorgegebenen Kriterien eine Aussage darüber ableiten, ob und bzw. in welchem Maße die damit gedruckten Nutzen in ihrer Farbgebung vom gespeicherten Original abweichen werden. Aufgrund dieser Aussage können dann die Nutzen entweder geometrisch anders zueinander angeordnet werden oder ihr Mengenverhältnis verändert werden. Darüber hinaus lässt sich auch die Empfehlung ableiten, auf die gewünschte Kombination von Nutzen ganz zu verzichten und stattdessen mit den "alten" Nutzen eine andere Sorte farblich besser passender Nutzen mitzudrucken.

Es ist vorteilhaft, wenn für jeden Einzelnutzen auf dem Bogen die Berechnung des Farbbedarfs bzw. der erforderlichen Farbzonenöffnung durchgeführt und mit den jeweiligen Geometriedaten zusammen gespeichert wird. Hierbei ist es besonders zweckmäßig, wenn die Bedeckungsdaten in einem feinmaschigeren Netz berechnet und gespeichert werden, als es die Farbzone selbst ist, zweckmäßigerweise in einem Netz mit Gittermaschen, deren Länge etwa um den Faktor 10 bis 100 unter dem Wert für die Breite einer Farbzone liegt.

Gemäß der Erfindung werden die farblichen Abweichungen in Wiederholaufträgen mit gemischten Nutzen innerhalb der Druckvorstufe schon bei der Bogenmontage erkannt, d. h. bevor die Druckpatte belichtet ist. Dies bietet die Möglichkeit, die Herstellung der Druckplatte zu optimieren, indem z. B. Qualitätsanzeigen aus dem Vergleich der Flächendeckungswerte abgeleitet werden oder ein automatisierter Prozess angestoßen wird, bei dem der Bedienperson geometrisch andere Mengenverhältnisse und Anordnungen der Nutzen vorgeschlagen werden, bei denen die Flächendeckungen innerhalb der Farbzonen optimal bei den für das Original abgespeicherten Werten liegen. Im Zuge dieser Automatisierung ist es weiterhin zweckmäßig, eine Reihe verschiedener Nutzen aus einer Datenbank auszuwählen und dafür optimierte Anordnungen aus den Flächendeckungswerten zu berechnen, wobei dann dem Benutzer die Nutzen vorgeschlagen werden, die am besten zueinander passen bzw. sich am ehesten dazu eignen auf einer Sammeldruckform gemeinsam gedruckt zu werden.

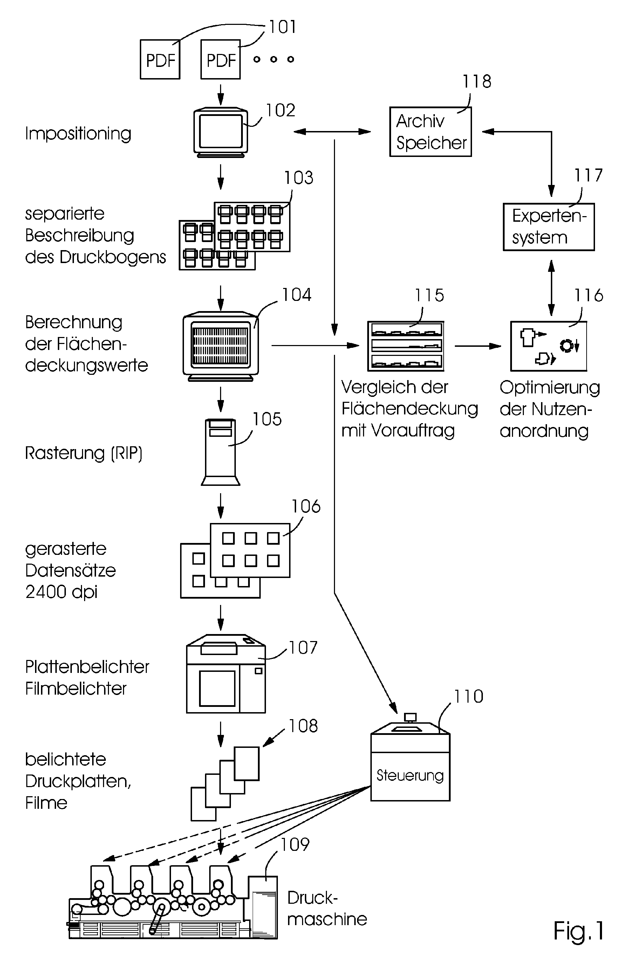

Weitere Vorteile der Erfindung ergeben sich aus der nachfolgenden Beschreibung von Ausführungsbeispielen anhand der Figuren 1 bis 5 der beigefügten Zeichnungen.

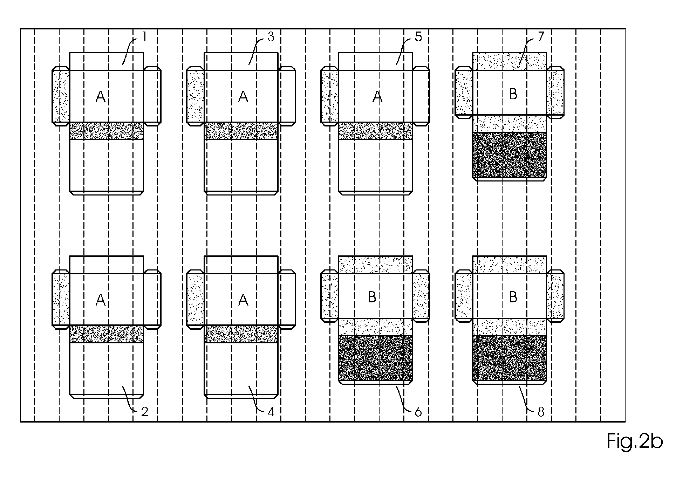

In der Figur 2b ist ein Druckbogen dargestellt, der auszustanzende Faltschachteln enthält, wobei darauf zwei Faltschachteln unterschiedlichen Typs nämlich A und B jeweils in mehreren Nutzen aufgebracht sind. Hierbei handelt es sich um einen Folgeauftrag insofern, als für die Faltschachtel des Typs A bereits ein oder mehrere Druckaufträge durchgeführt wurden, es sich also bei diesem Druckbogen in Bezug auf die Nutzen A um den eines Folgeauftrags handelt, während die Faltschachteln des Typs B mit denen des Typs A erstmals zusammen auf dem Druckbogen gedruckt werden sollen.

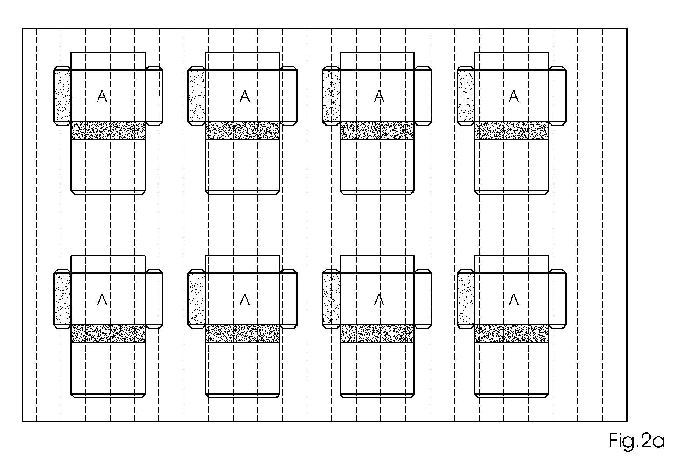

Der Druckbogen des vorhergehenden Auftrags, der z. B. nur Faltschachteln des Typs A enthält, ist in der Figur 2a dargestellt.

Für jeden der acht Einzelnutzen auf dem Bogen 1 nach Figur 2a wurde eine feinmaschige Berechnung der Flächendeckung durchgeführt. Dazu wurde über die Nutzen ein Gitter von ca. 4 mm² großen Maschen gelegt und der Farbbedarf für die einzelnen Farbauszüge YMCK aus den Bilddaten der Druckvorstufe berechnet und mit den Koordinaten der Gittermaschen abgespeichert als nutzenabhängige Verteilung der Flächendeckungswerte bzw. als für diesen Nutzen charakteristische Verteilung der Flächendeckungswerte.

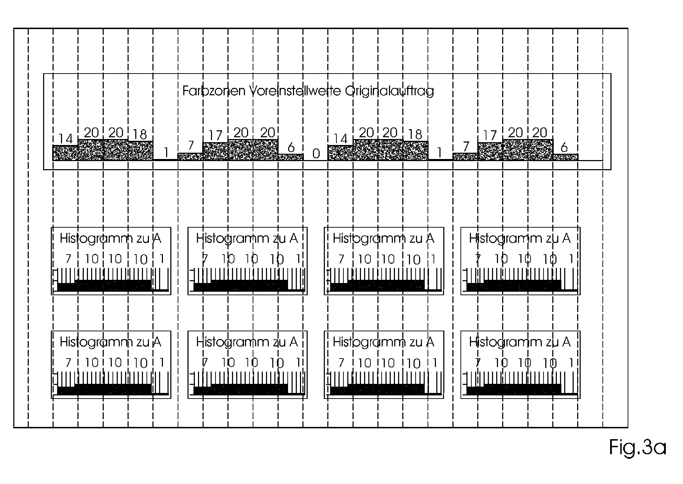

Nach der Montage der acht Nutzen wurden für die z. B. 24 oder 32 Farbzonen der Druckmaschine, mit denen der Bogen gedruckt werden soll, die Flächendeckungswerte der Maschen innerhalb jedes Farbzonenstreifens integriert, d. h. die Farbzoneneinstellwerte berechnet und außerdem der gesamte Farbbedarf fiir den Bogen in den einzelnen Farbauszügen ermittelt und zusammen mit den Einstellwerten für die Farbzonen abgespeichert. Das Ergebnis der Integration ist in der Figur 3a oben dargestellt. Darunter sind die Histogramme der Flächendeckung der einzelnen Nutzen mit ihrer Lage relativ zu den Farbzonen der Druckmaschine dargestellt. Da die Nutzen z. T. unterschiedlich weit in die Farbzonen hineinragen, ist auch die resultierende Farbzonenöffnung der Nutzenpaare unterschiedlich.

Zusätzlich wurde die geometrische Lage der acht Einzelnutzen auf dem Bogen abgespeichert. Diese Daten wurden für Wiederholaufträge ebenso archiviert, wie andere für einen Wiederholauftrag nützliche Daten wie z. B. die Parametrisierung für das Rastern der Halbtondaten, die Verwendung von Sonderfarben, etc.

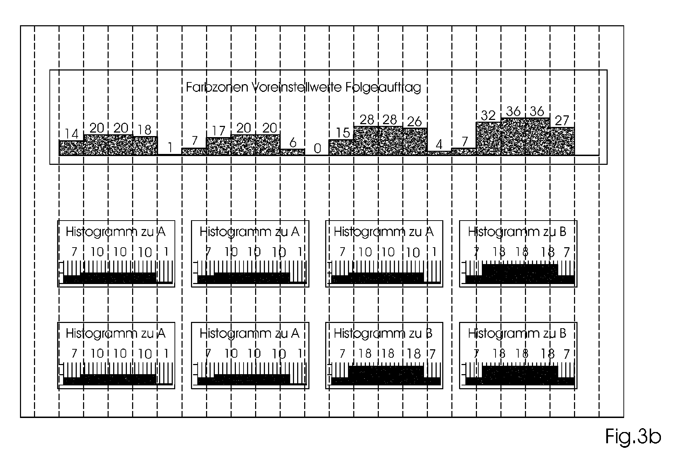

Bei der Montage des Bogens für den Wiederholauftrag nach Figur 2b, der jetzt neben den originalen Nutzen des Typs A auch solche des Typs B enthält, wird erst einmal in gleicher Weise vorgegangen, d. h. auch für diesen Bogen des zweiten Layouts wird für die einzelnen Farbauszüge der Gesamtwert der Flächendeckung und die Flächendeckung innerhalb der einzelnen Farbzonen berechnet. Zudem sind auch für die Nutzen des Typs B in einem Raster von 4 mm² die Flächendeckungswerte zusammen mit den Koordinaten der Rasterzellen abgespeichert worden. Die entsprechende Darstellung findet sich in Figur 3b.

Nur beispielsweise für das bessere Verständnis der Erfindung sind in den Figuren 3a und 3b für die durch die strichpunktierten Linien angedeuteten Farbzonen der Bögen 1 und 2 aus den Figuren 2a und 2b die prozentualen Flächendeckungswerte angegeben sowie in der äußersten rechten Spalte daneben der Mittelwert, der den Gesamtbedarf an Farbe für den Farbauszug wiedergibt.

Die für die Sammeldruckform nach Figur 1 ermittelten Werte werden jetzt, bevor die Druckplatten für diesen Druckauftrag belichtet werden, für jeden Farbauszug mit denen des Originalauftrags nach Figur 2 verglichen.

Im einfachsten Fall kann dies durch einen numerischen Vergleich erfolgen, indem die Werte einfach übereinander geschrieben werden bzw. darunter wie nachstehend dargestellt die Differenz Δ der Flächendeckungswerte ausgegeben wird:

| | | | | | | | |
|---|---|---|---|---|---|---|---|
| Bogen 1 | 0 | 14 | 20 | 20 | 18 | 1 | ... |
| Bogen 2 | 0 | 15 | 28 | 28 | 26 | 4 | ... |
| Δ | 0 | 1 | 8 | 8 | 8 | 3 | |

Diese Differenz Δ gibt den entscheidenden Hinweis: wenn nämlich alle Differenzwerte für die Farbzonen der beiden Druckaufträge Null sind oder entsprechend klein, d. h. unter einem vordefinierten Schwellwert liegen, wird ein Druck der Sammeldruckform nach Figur 2b mit praktisch identischen Farbzonenöffnungen erfolgen und es werden keine Farbabweichungen bei den Nutzen des Typs A gegenüber dem früheren Originaldruckauftrag entstehen. Wenn das nicht der Fall ist, dann wird im nächsten Schritt der Gesamtfarbbedarf, d. h. die integrale Flächendeckung für die Farbauszüge der Bögen der beiden Druckaufträge miteinander verglichen. Ergibt der Vergleich, dass für die Farbauszüge keine allzu großen Abweichungen der Gesamtflächendeckung vorliegen, wird ein Optimierungsprogramm gestartet, das darauf abzielt, die unterschiedlichen Nutzen des Typs A und B auf dem Bogen so anzuordnen, dass die Differenzen der Flächendeckung in den Farbzonen möglichst klein werden. Im anderen Falle, wenn die Gesamtflächendeckung der beiden Bögen nach Figur 2a und Figur 2b stärker voneinander abweichen, wird ein Warnhinweis ausgegeben und es werden der Bedienperson, die die Bogenmontage durchführt, Hinweise darauf gegeben, welche anderen in der Datenbank ebenfalls vorhandenen weiteren Nutzen C, D, E ... vom Gesamtflächenbedarf her besser für den Zusammendruck mit dem Nutzen des Typs A geeignet sind als die Nutzen des Typs B.

Bei dem oben angesprochenen Optimierungsvorgang mit dem Ziel, die Differenz der Flächendeckung in den Farbzonen zu minimieren, greift die Optimierungssoftware auf die für die Nutzen des Typs A und B gespeicherten Flächendeckungen in den mit ihren Koordinaten gespeicherten Maschen des feinen Gitternetzes zu und führt verschiedene Iterationen durch. Hierbei werden die einzelnen Nutzen des Typs A und B relativ zueinander auf dem Bogen verschoben und insgesamt sowie individuell gedreht, natürlich immer unter der Prämisse, dass sich die Nutzen nicht berühren oder gar überlappen dürfen. Auch die Menge der zwischen die Nutzen des Typs A eingebauten Nutzen des Typs B und umgekehrt kann verändert werden, um die Differenzen der Farbzonenwerte zu optimieren, wenn zugunsten der Farbtreue ein gewisses Maß an Makulatur aufgrund der dann nicht voll ausgenutzten Fläche des Bogens in Kauf genommen werden soll.

In dem relativ einfachen Fall der beiden in den Figuren 2a und 2b dargestellten Aufträge würde der Vergleich der Flächendeckungswerte aus dem Originalauftrag nach Figur 2a und dem Folgeauftrag nach Figur 2b ergeben, dass bedingt durch die hintereinander gedruckten Nutzen A und B in der dritten Spalte, d. h. bei den Nutzen 5 und 6, relativ große Differenzen der Flächendeckung auftreten, so dass nicht gewährleistet wäre, dass der mit 5 bezeichnete Nutzen A visuell den gleichen Farbeindruck hervorruft wie die auf der linken Seite angeordneten Nutzen 1 bis 4 des Typs A. Zwar unterscheidet sich auch die Flächendeckung der Nutzen 7 und 8 des Typs B auf der rechten Seite der Druckplatte erheblich vom Verlauf der Flächendeckung über die Nutzen A auf der linken Seite, da es sich ja beim Druck der Nutzen des Typs B um einen erstmaligen Auftrag handelt, spielt das (noch) keine Rolle. Das Optimierungsprogramm würde jetzt bei der Iteration der Anzahl der Nutzen feststellen, dass sich optimale Farbtreue erzielen lässt, wenn statt des Nutzens 5 vom Typ A dort ein Nutzen des Typs B angeordnet würde.

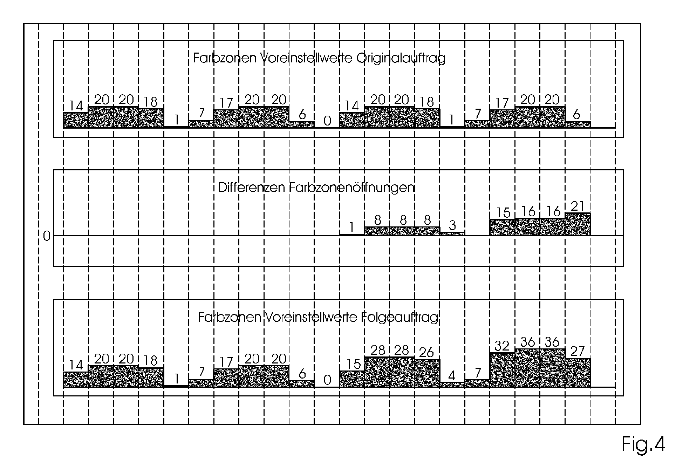

Weitere und komfortablere Möglichkeiten des Vergleichs der Flächendeckungswerte der beiden Aufträge ergeben sich durch die Darstellung von Histogrammen, wie sie in den Figuren 3a und 3b dargestellt sind, auf einem Bildschirm. Die integralen FarbzonenVoreinstellwerte von Originalauftrag und Folgeauftrag sowie die Differenz der Farbzonenwerte können außerdem wie in Figur 4 skizziert paarweise auf einem Bildschirm dargestellt werden. Auf einem zweiten Bildschirm ist die geometrische Anordnung der Nutzen des Typs A und des Typs B auf dem zu druckenden Bogen des Folgeauftrags wie z. B. in Figur 2b dargestellt zu sehen. Die Bedienperson kann jetzt mit Hilfe eines Eingabeinstruments wie Mauszeiger, Touchscreens, etc. die Anordnung der Nutzen A und B (Figur 2b) auf dem Bildschirm verschieben und erhält über die vorstehend beschriebene Berechnung der Flächendeckungen in den Farbzonen durch Integration der Werte aus den Maschen des feinen Gitters die entsprechenden Farbzonenöffnungen der beiden Aufträge gegenübergestellt oder als Differenz in Histogrammform auf dem Bildschirm nach Figur 4 aktuell dargestellt. Sie kann auf diese Weise die färbungsrelevante Optimierung interaktiv vornehmen.

Eine andere Vorgehensweise in einer höheren Automatisierungsstufe besteht darin, dass dem Bediener die verschiedenen geometrischen Anordnungen der Nutzen auf dem Bogen für die optimierten Farbzonendifferenzen z. B. aufsteigend oder absteigend nach dem Grad der Optimierung auf dem Bildschirm nach Figur 4 dargeboten werden und er so die Anordnung auswählen kann, die ihm bei noch verträglichen Differenzwerten innerhalb der Farbzonen die beste geometrische Anordnung, z. B. unter dem Gesichtspunkt der Druckweiterverarbeitung, bietet.

Es hat sich nun gezeigt, das dass vorstehend beschriebene Verfahren je nach Bewertung der Differenzen in den einzelnen Farbzonen bei der Optimierung der Anordnung der Nutzen auch solche unterschiedlichen Typs in Bogentransportrichtung hintereinander auf dem Bogen anordnet. Das kann jedoch ungünstig sein, da die Reihenfolge von voran- bzw. nachgestellten Nutzen unterschiedlichen Typs beim Drucken ebenfalls zu einer sichtbaren Änderung der Färbung führen kann, selbst wenn die Differenzen der Farbzonenöffnungen sehr klein sind. Aus diesem Grunde kann es zweckmäßig sein, auch innerhalb eines Farbzonenstreifens in Bogentransport- bzw. Druckrichtung eine gewisse Konstanz der Flächendeckung zu fordern bzw. als Kriterium in den Vergleich von Originalauftrag und Folgeauftrag einzubeziehen. Hierbei kann dann so vorgegangen werden, dass die beim Vergleich der Flächendeckungswerte ausgewerteten Differenzen quer zur Bogentransportrichtung, d. h. zwischen den Farbzonen und in Bogentransportrichtung, d. h. innerhalb der Farbzonen, unterschiedlich bewertet werden, wobei jeweils darauf abgestellt wird, dass bei der Bewertung insgesamt die Differenzen in der Färbung der Nutzen des Typs A zwischen beiden Aufträgen unterhalb der Wahrnehmungsgrenze durch den menschlichen Betrachter bleiben soll.

Das Verfahren zur Herstellung der Druckplatte für das Drucken der Nutzen auf einer z. B. Bogendruckmaschine ist in der Figur 1 nochmals in Form eines Flussschemas skizziert:

Die zu druckenden Nutzen liegen beispielsweise als PDF-Dateien 101 vor und werden im Zuge des sogenannten Impositioning auf dem elektronisch zu setzenden Druckbogen positioniert. Soweit die Nutzen nicht neu erstellt wurden, können sie auch aus einem Archiv/Speicher 118 vom Impositioning-Arbeitsplatz 102 abgerufen werden.

Im Zuge des Impositioning werden in den einzelnen Farbauszügen separierte Beschreibungen des Druckbogens 103 generiert, auf denen jeweils mehrere Nutzen, beispielsweise Faltschachteln, angeordnet werden.

Bevor der Druckjob nun im Rasterimageprozessor 105 gerastert wird, soll die Anordnung der Nutzen wie vorstehend beschrieben optimiert werden. Dazu werden in dem Rechner 104 aus der separierten Beschreibung der Druckbögen 103 die Flächendeckungswerte ermittelt, und zwar zum einen für einen aus dem Archiv/Speicher 108 geholten Originalauftrag und den Folgeauftrag, auf dem unterschiedliche Nutzen auf den Druckvorlagen 103 des Druckbogens angeordnet wurden.

Am Bildschirm des Rechners 104 können nun die Histogramme der Flächendeckungswerte für beide Aufträge verglichen werden. Dieser Schritt ist mit 115 bezeichnet. Gleichzeitig können die verschiedenen Nutzen auf dem Druckbogen hinsichtlich ihrer Anordnung, Menge, etc. optimiert werden. Dies kann dadurch geschehen, dass die Nutzen in einem interaktiven Prozess wie durch die Grafik 116 symbolisiert auf dem Bildschirm des Impositioning-Rechners 102 hinsichtlich Anzahl und Lage dargestellt werden. Beide Rechner 102 und 104 können zu einem Arbeitsplatz mit Doppelbildschirm zusammengefasst sein oder es kann auch ein einziger Bildschirm verwendet werden, auf dem die Histogramme in der Darstellung nach 115 bzw. die Differenzen der Farbzoneneinstellungen von Original- und Folgeauftrag sowie die Anordnung der Nutzen bezüglich ihrer Lage nach 116 in verschiedenen Fenstern eines Bildschirms generiert werden.

Hierbei sind die Rechner 102 und 104 an ein Expertensystem 117 angeschlossen, das in Verbindung mit den im Archiv/Speicher 118 abgelegten Nutzen von weiteren früheren Druckaufträgen diejenigen aussuchen und vorschlagen kann, die am ehesten zum Zusammendruck mit den primär nachzudruckenden Nutzen geeignet sind.

Nachdem die beste Kombination der Nutzen für den zu druckenden Bogen gefunden ist, wird der Druckjob im Rasterimageprozessor 105 gerastert und die gerasterten Datensätze der Farbauszüge 106 mit einer Auflösung von typisch 2.440 dpi werden entweder einem Plattenbelichter oder Filmbelichter 107 zugeführt, wo die Druckplatten oder Filme in den erforderlichen z. B. Vier-Farb-Auszügen 108 ausbelichtet werden.

Gleichzeitig werden im Rechner 104 aus den Flächendeckungswerten in den Farbzonen die Voreinstelldaten für die Farbzonen in den Druckwerken der Druckmaschine 109 an die Steuerung 110 der Druckmaschine übergeben. Die Steuerung stellt die Zonenschrauben in der Maschine ein und anschließend können die Druckbogen des Folgeauftrags mit der erforderlichen Farbtreue auf der Druckmaschine 109 gedruckt werden.

### Bezugszeichenliste

- 1: Nutzen
- 2: Nutzen
- 3: Nutzen
- 4: Nutzen
- 5: Nutzen
- 6: Nutzen
- 7: Nutzen
- 8: Nutzen

- 101: PDF-Datei
- 102: Rechner (Impositioning-Arbeitsplatz)
- 103: Druckbogen
- 104: Rechner
- 105: Rasterimagerprozessor
- 106: Datensätze gerastert
- 107: Belichter
- 108: belichtete Druckplatten
- 115: Bildschirminhalt
- 116: Bildschirminhalt
- 117: Expertensystem
- 118: Archiv/Speicher
- 109: Druckmaschine
- 110: Steuerung

- A: Nutzentyp
- B: Nutzentyp
- Δ: Differenz

## Patentansprüche

1. Verfahren zur Herstellung von Sammeldruckformen für das Drucken von Sammelaufträgen mit Nutzen unterschiedlichen Typs auf einem Druckbogen, wobei aus den Bilddaten des Druckbogens (103) Flächendeckungswerte für Druckmaschinen (109) gewonnen werden, mit denen die Nutzen gedruckt werden,
**dadurch gekennzeichnet,**
**dass** die Flächendeckungswerte in den Farbzonen aus einem früheren Auftrag mit denen aus einem Folgeauftrag verglichen werden, bei dem sich die Menge, die Anordnung oder der Typ mindestens eines Nutzens (1 bis 8) vom entsprechenden Wert des früheren Auftrags unterscheidet, und dass dann, wenn die Differenzen der Flächendeckungswerte für die Farbzonen einen vordefinierten Schwellwert überschreiten, die geometrische Anordnung und/oder die Menge der Nutzen (1 bis 8) auf dem Bogen (103) so verändert wird, dass die Differenzen dieser Flächendeckungswerte minimiert werden.

2. Verfahren nach Anspruch 1,
wobei zusätzlich die Flächendeckungswerte für verschiedene Typen (A, B) von Nutzen in einem im Vergleich zu den Abmessungen einer Farbzone kleineren Raster ermittelt und für die Zellen des Rasters zusammen mit der Lageinformation über die jeweilige Rasterzelle gespeichert wird.

3. Verfahren nach Anspruch 2,
wobei die Flächendeckungswerte und Lageinformationen der Rasterzellen zusammen mit anderen den jeweiligen Typ des Nutzens charakterisierenden Daten gespeichert bzw. archiviert werden.

4. Verfahren nach einem der Ansprüche 1 bis 3,
wobei vor dem Belichten der Druckplatte (108) für einen Folgeauftrag die Flächendeckungswerte in den Farbzonen der Druckwerke für verschiedene Anordnungen der Nutzen der Sammeldruckform berechnet werden, derart, dass die Anordnungen mit den geringsten Abweichungen zwischen den Flächendeckungswerten in den Farbzonen des Vorauftrags und des Folgeauftrags auswählbar sind.

5. Verfahren nach Anspruch 4,
wobei die Anordnungen der Nutzen mit den geringsten Abweichungen der Flächendeckungswerte in den Farbzonen auf einem Bildschirm (116) dargestellt werden.

6. Verfahren nach einem der Ansprüche 1 bis 5,
wobei darüber hinaus die integralen Flächendeckungswerte der Farbauszüge des gesamten Druckbogens aus dem früheren Auftrag mit denen aus dem Folgeauftrag verglichen werden und dann, wenn die Differenz der integralen Flächendeckungswerte in einzelnen Farbauszügen des Folgeauftrags einen vorgegebenen Wert überschreitet, ein Warnhinweis ausgegeben wird.

7. Verfahren nach Anspruch 6,
wobei der Warnhinweis aufzeigt, welcher nicht im Vorauftrag enthaltener Nutzentyp (B) gegen einen oder mehrere Nutzen eines anderen Typs ausgetauscht werden kann, der vom Gesamtbedarf der Flächendeckung des Bogens besser für den Zusammendruck mit den Nutzen des Vorauftrags geeignet ist, und für die neue Kombination von Nutzen auf dem Bogen die Flächendeckungswerte in den Farbzonen mit denen des Vorauftrags verglichen werden.

8. Verfahren nach Anspruch 7,
wobei mehrere unterschiedliche Typen von Nutzen nacheinander mit einem Nutzen aus einem Vorauftrag kombiniert werden, für jede dieser Kombinationen die im Hinblick auf möglichst kleine Differenzen der Flächendeckungswerte günstigste Anordnung der Nutzen auf dem Bogen berechnet wird und die günstigsten Anordnungen gespeichert und/oder als Vorschlag angezeigt bzw. visualisiert werden.

9. Verfahren nach Anspruch 8,
wobei die Flächendeckungswerte in den Farbzonen für die verschiedenen simulierten Anordnungen von unterschiedlichen Typen von Nutzen auf dem Druckbogen, die im Zuge von Simulationen errechnet wurden bzw. die entsprechenden Farbzonenvoreinstellwerte in einer Expertendatenbank gespeichert werden.

10. Verfahren nach Anspruch 3,
wobei die Abmessungen des Rasters bzw. der Maschen mindestens um einen Faktor 10 kleiner sind als die Breite einer Farbzone.

11. Verfahren nach einem der vorhergehenden Ansprüche 1 bis 10,
wobei die Differenzen der Flächendeckungen in den Farbzonen des Vorauftrags und des Folgeauftrags in Form von Histogrammen dargestellt werden,
die für einen Vorauftrag und einen Folgeauftrag errechneten Flächendeckungen innerhalb einer Farbzone unterteilt werden, und zwar in Längsrichtung der Farbzone, d. h. in Laufrichtung des Bedruckstoffs, dass die Teilflächendeckungswerte einander entsprechender Bereiche des Vorauftrags und des Folgeauftrags miteinander verglichen werden und
dass die Differenzen, die aus diesem Vergleich resultieren, als weiteres Kriterium bei der Optimierung der Anordnung der Nutzen (1 bis 8) auf dem Bogen herangezogen werden.

12. Vorrichtung zur Herstellung von Sammeldruckformen für das Drucken von Sammelaufträgen mit Nutzen unterschiedlichen Typs auf einem Druckbogen, die Vorrichtung beinhaltend einen Rechner einer Workstation (102, 104) zur Bearbeitung von Bilddaten sowie zur Ermittlung von Flächendeckungswerten in den Farbzonen bzw. Farbzonenvoreinstellwerten aus den Bilddaten, die Vorrichtung **gekennzeichnet durch** eine Vergleichseinrichtung (115),welche die Flächendeckungswerte in den Farbzonen für unterschiedliche Sammelaufträge in den Farbauszügen des Druckbogens miteinander vergleicht, sowie ein Expertensystem (117) zur Optimierung der geometrischen Anordnung (116) und/oder der Menge der Nutzen (1 bis 8) des Sammelauftrags auf dem Bogen (103), wobei als Kriterium für die Optimierung die Differenzen der Flächendeckungswerte in den Farbzonen minimiert werden.

13. Vorrichtung zur Durchführung des Verfahrens nach Anspruch 12, **gekennzeichnet durch** einen Raster-Image-Prozessor (105) geeignet zum Überführen von Farbauszügen (103) eines bezüglich der Anordnung und/oder der Menge der Nutzen veränderten Druckbogens in Rasterbilder

14. Vorrichtung nach Anspruch 13, **gekennzeichnet durch** einen Plattenbelichter (107) zur Belichtung von Druckplatten mit den gerasterten Farbauszügen.

15. Vorrichtung nach Anspruch 14, **gekennzeichnet durch** eine Druckmaschine (109) für das Drucken des Sammelauftrags.

## Claims

1. Method for creating collective printing formes for printing collective jobs including different types of blanks on one print sheet, wherein area coverage values with which the blanks are printed are obtained from the image data of the print sheet (103) for printing presses (109) that print the blanks,
**characterized in**
**that** the area coverage values in the ink zones from a previous print job are compared to those of a follow-up job in which the number, arrangement, or type of at least one blank (1 to 8) differs from the corresponding value of the previous job, and
**that** if the differences in the area coverage values for the ink zones exceed a predefined threshold, the geometrical arrangement and/or the number of blanks (1 to 8) on the sheet (103) is changed in such a way that the difference of the area coverage values are minimized.

2. Method according to claim 1,
wherein additionally, the area coverage values for different types (A, B) of blanks are determined in a grid pattern that is smaller in comparison to the dimensions of an ink zone and are saved for the cells of the grid pattern together with the positional information on the respective grid pattern cell.

3. Method according to claim 2,
wherein the area coverage values and positional information of the grid pattern cells are saved or archived together with other data characterizing the respective type of blank.

4. Method according to any one of claims 1 to 3,
wherein prior to the exposure of the printing plate (108) for a follow-up job, the area coverage values in the ink zones of the printing units are calculated for various arrangements of the blanks of the collective printing forme in such a way that the arrangement with the smallest deviation between the area coverage values in the ink zones of the previous print job and the follow-up print job are selectable.

5. Method according to claim 4,
wherein the arrangements of the blanks with the smallest deviations of the area coverage values in the ink zones are displayed on a screen (116).

6. Method according to any one of claims 1 to 5,
wherein the integral area coverage values of the colour separations of the entire print sheet from the previous print job are compared to those of the follow-up job and a warning is given if the difference of the integral area coverage values in individual colour separations of the follow-up job exceeds a predefined value.

7. Method according to claim 6,
wherein the warning indicates which type of blank (B) that was not included in the previous print job may be replaced by one or more blanks of a different type that is better suited for being printed together with the blanks of the previous job in terms of the total required area coverage of the sheet, and wherein the area coverage values in the ink zones for the new combination of blanks on the sheet are compared to those of the previous print job.

8. Method according to claim 7,
wherein a number of different types of blanks are successively combined with a blank from a previous job, the arrangement of the blanks on the sheet that is most favourable in terms of the smallest possible differences in the area coverage values is calculated, and the most favourable arrangements are saved and/or displayed or visualized as a suggestion.

9. Method according to claim 8,
wherein the area coverage values, which have been calculated in the course of simulations, in the ink zones for the various simulated arrangements of different types of blanks on the print sheet and/or the corresponding ink zone pre-set values are saved in an expert database.

10. Method according to claim 3,
wherein the dimensions of the grid pattern and the grid pattern cells, respectively, are smaller than the width of an ink zone by a factor 10 at the minimum.

11. Method according to any one of the preceding claims 1 to 10,
wherein the differences of the area coverages in the ink zones of the previous job and of the follow-up job are represented in the form of histograms,
wherein the area coverages calculated for a previous job and a follow-up job are subdivided within an ink zone, namely in the longitudinal direction of the ink zone, i.e. in the running direction of the printing substrate,
wherein the partial area coverage values of corresponding areas of the previous job and the follow-up job are compared to each other, and
wherein the differences resulting from the comparison are factored in as a further criterion in the optimization of the arrangement of the blanks (1 to 8) on the sheet.

12. Device for creating collective printing formes for printing collective jobs with different types of blanks on one printed sheet, the device comprising
a computer of a work station (102, 104) for processing image data and for establishing area coverage values in the ink zones and ink zone pre-set values, respectively, from the image data,
the device **characterized**
**by** a comparison device (115) that compares the area coverage values in the ink zones for different collective jobs in the colour separations of the print sheet to each other, as well as by an expert system (117) for optimizing the geometric arrangement (116) and/or the number of blanks (1 to 8) of the collective job on the sheet (103), wherein the differences in the area coverage values in the ink zones are minimized as a criterion for the optimization.

13. Device according to claim 12 for implementing the method, **characterized by** a Raster Image Processor (105) suitable for transforming colour separations (103) of a print sheet that has been modified in terms of the arrangement and/or the number of blanks into raster images.

14. Device according to claim 13,
**characterized by** a plate exposure device (107) for exposing printing plates in accordance with the rasterized colour separations.

15. Device according to claim 14,
**characterized by** a printing press (109) for printing the collective job.

## Revendications

1. Procédé pour la fabrication de formes d'impression multi-poses pour l'impression de travaux multi-poses avec des poses de différents types sur une feuille d'impression (103), des valeurs de couverture de surface pour des machines d'impression (109) étant extraites des données d'image de la feuille d'impression (103), avec lesquelles les poses sont imprimées,
**caractérisé en ce**
**que** les valeurs de couverture de surface dans les zones d'encrage d'un travail antérieur sont comparées à celles du travail suivant, où la quantité, la disposition ou le type d'au moins une pose (1 à 8) divergent de la valeur correspondante du travail antérieur, et en ce qu'ensuite si les différences des valeurs de de couverture de surface pour les zones d'encrage dépassent une valeur seuil prédéfinie, la disposition géométrique et/ou la quantité des poses (1 à 8) sont modifiées sur la feuille (103) de sorte que les différences de ces valeurs de couverture de surface sont minimisées.

2. Procédé selon la revendication 1,
les valeurs de couverture de surface étant déterminées pour les différents types (A, B) de poses dans une trame plus petite en comparaison des dimensions d'une zone d'encrage et étant stockées pour la cellule respective de trame ensemble avec l'information de position.

3. Procédé selon la revendication 2,
les valeurs de couverture de surface et les informations de position des cellules de trame étant archivées respectivement stockées ensemble avec d'autres données caractéristiques du type de pose.

4. Procédé selon l'une des revendications 1 à 3,
avant l'insolation de la plaque d'impression (108) pour un travail suivant, les valeurs de couvertures de surface étant calculées dans les zones d'encrage des groupes d'impression pour différentes dispositions des poses de formes d'impression multi-poses, de sorte que les dispositions avec les divergences minimales entre les valeurs de couvertures de surface dans les zones d'encrage du travail précédent et du travail suivant peuvent être sélectionnées.

5. Procédé selon la revendication 4,
les dispositions des poses avec les divergences minimales des valeurs de couverture de surface étant représentées dans les zones d'encrage sur un écran (116).

6. Procédé selon l'une des revendications 1 à 5
les valeurs intégrales de couverture de surface des séparation d'encre de l'ensemble de la feuille d'impression issues du travail antérieur étant comparées à celles du travail suivant et ensuite si la différence des valeurs de couverture de surface intégrales dépasse dans chacune des séparation d'encrage du travail suivant une valeur prédéterminée, un message d'avertissement étant édité.

7. Procédé selon la revendication 6,
le message d'avertissement affichant, que le type de pose contenu dans le travail antérieur ne peut pas être échangé contre une ou plusieurs poses d'un autre type, qui est mieux approprié pour la consommation totale de la couverture de surface de la feuille 'a l'impression commune avec la pose du travail antérieur et pour la nouvelle combinaison de poses sur la feuille, et les valeurs de couverture de surface étant comparées dans les zone d'encrage avec celles du travail antérieur.

8. Procédé selon la revendication 7,
plusieurs types différents de pose étant combinés les unes après les autres à une pose d'un travail antérieur, la disposition des poses la plus favorable possible par rapport aux différences les plus petites possibles des valeurs de couverture de surface étant calculées pour chacune de ces combinaisons sur la feuille et les dispositions les plus favorables étant stockées et/ou affichées respectivement visualisées et/ou en tant que proposition.

9. Procédé selon la revendication 8,
les valeurs de couverture de surface ayant été calculées dans les zones d'encrage pour les dispositions différentes simulées de différents types de poses sur la feuille d'impression, qui ont été calculées dans le cadre de simulations, respectivement les valeurs de préréglage correspondante de zones d'encrage étant stockées dans une banque de données d'expert.

10. Procédé selon la revendication 3,
les dimensions de la trame respectivement des mailles étant au moins inférieure d'un facteur 10 à la valeur d'une zone d'encrage.

11. Procédé selon l'une des revendications précédentes 1 à 10, les différences des couvertures de surface dans les zones d'encrage du travaux antérieur et du travail suivant étant représentées sous forme d'histogrammes,
les couvertures de surface calculées pour un travail antérieur et un travail suivant étant divisées à l'intérieur d'une zone d'encrage et ce dans la direction longitudinale de la zone d'encrage, c.-à-d. dans le sens de passage du substrat d'impression, de sorte que les valeurs de couverture de surface partielle de zones du travail antérieur et du travail suivant sont comparées entre elles et
que les différences qui résultent de la comparaison, sont utilisées comme critère supplémentaire pour l'optimisation de la disposition des poses (1 à 8) sur la feuille.

12. Dispositif pour la fabrication de formes d'impression multi-poses pour l'impression de travaux multi-poses avec des poses de différents types sur une feuille d'impression, le dispositif comprenant:
un ordinateur d'un poste de travail (102, 104) pour le traitement de données d'image ainsi que pour la détermination de valeurs de couverture de surface dans les zones d'encrage respectivement de valeurs préréglées de zones d'encrage à partir des données d'image,
le dispositif étant **caractérisé par** un dispositif de comparaison (115), qui compare entre elles les valeurs de couverture de surfaces dans les zones d'encrage pour différents travaux multi-poses dans les séparations d'encre de la feuille d'impression ainsi qu'un système d'expert (117) pour l'optimisation de la disposition géométrique (116) et/ou de la quantité de poses (1 à 8), du travail multi-poses sur la feuille (103), les différentes valeurs de couverture de surface étant minimisées dans les zones d'encrage en tant que critère pour l'optimisation.

13. Dispositif pour la mise en oeuvre du procédé selon la revendication 12, **caractérisé par** un processeur d'image de trame (105) approprié à transformer en images de trame des séparations d'encre (103) d'une feuille d'impression modifiée par rapport à la disposition et/ou la quantité des poses.

14. Dispositif selon la revendication 13,
**caractérisé par** une unité d'insolation (107) pour l'insolation de plaques d'impression avec les séparation d'encre tramées.

15. Dispositif selon la revendication 14,
**caractérisé par** une machine d'impression (109) pour l'impression du travail multi-poses.
